# EUROPÄISCHE PATENTANMELDUNG

(11) **EP 1 071 003 A2**
(43) Veröffentlichungstag der Anmeldung: **24.01.2001**
(21) Anmeldenummer: 00110215.1
(22) Anmeldetag: 17.05.2000
(51) Int. Cl.: G05G 1/14

(54) **Pedal für ein Kraftfahrzeug**

(30) Priorität: 22.05.1999 DE 19923697
(71) Anmelder: Volkswagen Aktiengesellschaft, 38436 Wolfsburg (DE)
(72) Erfinder: Wohllebe, Thomas, Dipl.-Ing., 38110 Braunschweig (DE)

(57) **Zusammenfassung**

Bekannte Pedalverstellungen weisen den Nachteil auf, daß eine Trittplatte (3) des Pedals bei einer Verstellung nur horizontal verfahren werden kann. Wenn ein Pedal (1) aber bei einem kleinen Fahrer näher an ihn herangebracht werden muß ist es meist auch erforderlich, die Trittplatte (3) abzusenken, da kleine Fahrer auch über kleinere Füße verfügen. Erfindungsgemäß wird deshalb ein Pedal (1) vorgeschlagen, dessen Hebel (2) teleskopierbar ausgebildet ist.

## Beschreibung

Pedal für ein Kraftfahrzeug, insbesondere Brems-, Kupplungs- oder Gaspedal, mit einem schwenkbar am Fahrzeugrahmen gelagerten Hebel und einer am freien Ende des Hebels befestigten Trittplatte.

Ein solches Pedal ist durch die EP 0 363 546 A1 bekannt geworden. Bei dem darin gezeigten Pedal sind sowohl das obere Schwenklager als auch das untere Schwenklager gemeinsam und synchron zueinander verschiebbar. Hierdurch ist es möglich, die Position des Pedals zum Kraftfahrzeugführer (Fahrer) auf die Körpergröße des Fahrers einzustellen. Hierzu reicht nämlich ein alleiniges Verstellen der Sitzposition oft nicht aus, da sehr kleine Fahrer häufig bereits mit dem Oberkörper sehr nahe am Lenkrad sitzen, um die Pedale gerade noch erreichen zu können. Die vorgenannte Versteilmöglichkeit der Pedale ermöglicht es auch kleinen Fahrern einen bequemen Sitzabstand zum Lenkrad einzunehmen und sodann die Pedale, soweit erforderlich, an sich heranzuholen. Nachteilig bei der vorbeschriebenen Pedalverstellung ist aber, daß die Pedale immer genau horizontal verfahren werden und somit der vertikale Abstand zwischen den Pedalen und dem Bodenblech konstant bleibt. In einigen Kraftfahrzeugen steigen die Bodenbleche nach vorn hin, also vom Fahrer weg, leicht an, was zu einer Vergrößerung des vertikalen Abstands zwischen Bodenblech und dem Pedal beim Heranholen des Pedals an den Fahrer führt. Dieses ist deshalb nachteilig, weil kleine Fahrer in der Regel auch über kleinere Füße, sprich kleinere Schuhgrößen verfügen. Um das Pedal gut mit dem Fuß erreichen zu können, müssen sehr kleine Fahrer daher häufig den Hacken vom Bodenblech abheben und mit eigener Muskelkraft den Fuß tragen. Legen sie den Hacken auf das Bodenblech auf, erreichen sie das Pedal gerade noch mit den Fußspitzen. Dieses ist insbesondere bei einem ständig zu betätigenden Gaspedal besonders ungünstig, weil dies zum "Einschlafen" der Beine führt. Diese unergonomische Fußhaltung führt auch zu einer insgesamt schnelleren Ermüdung des Fahrers, was entweder häufigere Pausen erforderlich macht oder andererseits zu einer Gefährdung der Verkehrssicherheit führt.

Aus der EP 0 256 466 A2 ist ebenfalls ein verstellbares Pedal bekannt, bei dem wiederum nur ein horizontales Verfahren des Pedals möglich ist.

Um die vorstehenden Nachteile zu umgehen, offenbart die DE 196 25 765 A1 eine Bodenhöhenverstelleinrichtung. Diese Bodenhöhenverstelleinrichtung wird auf dem Bodenblech des Kraftfahrzeugs montiert und verfügt über eine höhenverstellbare Plattform, um so den vertikalen Abstand zwischen der Trittplatte des Pedals und der Plattform einstellen zu können.

Ausgehend vom eingangs genannten Stand der Technik liegt der Erfindung das Problem zugrunde, eine ergonomische Verstellmöglichkeit für Pedale in Kraftfahrzeugen vorzuschlagen.

Zur Lösung dieses Problems ist das erfindungsgemäße Pedal dadurch gekennzeichnet, daß der Hebel teleskopierbar ist.

Durch die erfindungsgemäße Maßnahme ist der Hebel des Pedals längenveränderlich ausgebildet. Durch diese Längenveränderlichkeit kann der vertikale Abstand zwischen Bodenblech und Trittplatte des Pedals beliebig eingestellt werden. Diese Längenveränderlichkeit kann sowohl für sogenannte stehende als auch für sogenannte hängende Pedalanordnungen vorteilhaft eingesetzt werden. Ferner wird durch verlängern des Hebels für kleine Fahrer gleichzeitig der wirksame Hebelarm vergrößert, so daß weniger Fußkraft zur Pedalbetätigung benötigt wird.

Besonders vorteilhaft ist es, wenn bei einer sogenannten hängenden Pedalanordnung das Pedal schräg nach unten und zum Kraftfahrzeugführer (Fahrer) hin gerichtet ist. Hierdurch wird durch bloßes Verstellen der Hebellänge sowohl der vertikale Abstand zwischen Trittplatte und Bodenblech als auch gleichzeitig der horizontale Abstand zwischen dem Fahrer und der Trittplatte eingestellt. Durch Wahl eines geeigneten Neigungswinkels kann so eine Verstellung gemäß den Proportionen unterschiedlich großer Fahrer eingestellt werden. Gegebenenfalls kann hierzu der Hebel bogenförmig ausgebildet sein.

Zusätzlich oder alternativ zur vorbeschriebenen Schrägstellung des Hebels kann der Hebel zweckmäßigerweise auch verschiebbar am Fahrzeugrahmen gelagert sein. Dabei wird der Hebel annähernd in Horizontalrichtung verschoben.

Weitere Merkmale der Erfindung beziehen sich auf konstruktive Einzelheiten des Pedals. Die Erfindung wird nachfolgend anhand des in der Zeichnung dargestellten Ausführungsbeispiels näher erläutert. In der Zeichnung zeigt:

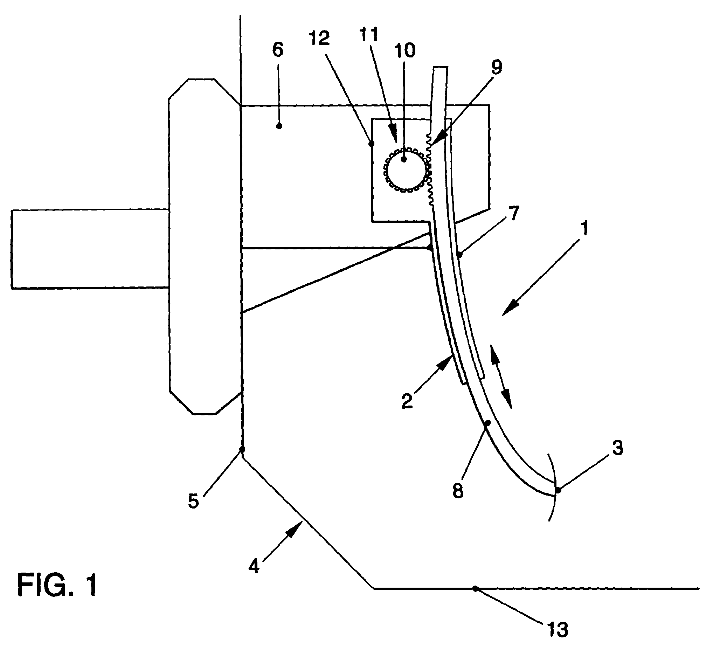

Fig. 1 ein Pedal mit den Erfindungsmerkmalen im Vertikalschnitt.

Das in der Zeichnung dargestellte Pedal 1 weist einen Hebel 2 mit einer an seinem freien Ende befestigten Trittplatte 3 auf. Der Hebel 2 ist schwenkbar an einem Fahrzeugrahmen 4, nämlich an einem an einer Spritzwand 5 befestigten Lagerbock 6 gelagert.

Der Hebel 2 ist teleskopierbar ausgebildet. Er weist ein äußeres Teleskoprohr 7 und eine verschiebbar in dem Teleskoprohr 7 gelagerte Teleskopstange 8 auf. Die Teleskopstange 8 weist an ihrem der Trittplatte 3 gegenüberliegenden Endbereich eine Verzahnung 9 auf, die mit einem Zahnrad 10 eines beispielsweise elektromotorischen Verstellantriebs 11 zusammenwirkt. Der Verstellantrieb 11 ist im vorliegenden Fall in einem Gehäuse 12 gelagert, daß einstückig mit dem Teleskoprohr 7 verbunden ist. Mittels des Verstellantriebs 11 ist es möglich, die Teleskopstange 8 gegenüber dem Teleskoprohr 7 ein- und auszufahren.

In dem gezeigten Ausführungsbeispiel ist eine hängende Pedalanordnung gezeigt, bei dem der Hebel 2 schräg nach unter gerichtet ist, derart, daß bei einem Ausfahren der Teleskopstange 8 gegenüber dem Teleskoprohr 7 die Trittplatte 3 sowohl näher an ein Bodenblech 13 als auch an den Fahrer (nicht gezeigt) herangefahren wird. Hierdurch wird erreicht, daß durch eine einzige Verstellung eine Anpassung an die Körpergröße des Fahrers möglich ist. Durch Wahl eines geeigneten Neigungswinkels des Hebels 2 wird dabei eine Anpassung an die üblichen Proportionen des menschlichen Körpers erreicht. Für eine noch bessere Anpassung ist im vorliegenden Fall der Hebel 2 gebogen ausgebildet.

Für eine individuellere Anpassung an die Proportionen des Fahrers kann der Hebel 2 zusätzlich verschiebbar am Fahrzeugrahmen 4 gelagert sein. Die Verschiebung des Hebels 2 erfolgt vorzugsweise etwas in Horizontalrichtung. Die verschiebbare Lagerung des Hebels 2 kann zusätzlich oder alternativ zur schrägen Anordnung des Hebels 2 vorgesehen sein. Letzteres ist insbesondere bei einer sogenannten stehenden Pedalanordnung oder dann, wenn eine Schrägstellung des Hebels 2 im oben beschriebenen Sinne nicht möglich ist, zweckmäßig.

Alternativ zum oben beschriebenen Verstellantrieb 11 mittels eines Zahnrades 10 und einer Verzahnung 9 kann auch eine hydraulische oder pneumatische Verstellung oder eine Verstellung mittels Spindelantrieb vorgesehen werden.

### BEZUGSZEICHENLISTE

- 1: Pedal
- 2: Hebel
- 3: Trittplatte
- 4: Fahrzeugrahmen
- 5: Spritzwand
- 6: Lagerbock
- 7: Teleskoprohr
- 8: Teleskopstange
- 9: Verzahnung
- 10: Zahrad
- 11: Verstellantrieb
- 12: Gehäuse
- 13: Bodenblech

## Patentansprüche

1. Pedal für ein Kraftfahrzeug, insbesondere Brems-, Kupplungs- oder Gaspedal, mit einem schwenkbar am Fahrzeugrahmen (4) gelagerten Hebel (2) und einer am freien Ende des Hebels (2) befestigten Trittplatte (3) **dadurch gekennzeichnet,** daß der Hebel (29) teleskopierbar ist.

2. Pedal nach Anspruch 1, dadurch gekennzeichnet, daß der Hebel (2) schräg nach unten und zum Kraftfahrzeugführer hin gerichtet ist.

3. Pedal nach Anspruch 1 oder 2, dadurch gekennzeichnet, daß der Hebel (2) bogenförmig ausgebildet ist.

4. Pedal nach einem der Ansprüche 1 bis 3, dadurch gekennzeichnet, daß der Hebel (2) etwa horizontalverschiebbar am Fahrzeugrahmen (4) gelagert ist.

5. Pedal nach einem der Ansprüche 1 bis 4, dadurch gekennzeichnet, daß der Hebel (2) ein Teleskoprohr (7) und eine verschiebbar im Teleskoprohr (7) geführte Teleskopstange (8) aufweist.

6. Pedal nach Anspruch 5, dadurch gekennzeichnet, daß die Teleskopstange (8) eine Verzahnung (9) aufweist, die mit einem Zahnrad (10) eines Verstellantriebs (11) zusammenwirkt.
